# EUROPEAN PATENT APPLICATION

(11) **EP 2 645 765 A1**
(43) Date of publication of application: **02.10.2013**
(21) Application number: 11843274.9
(22) Date of filing: 17.08.2011
(51) Int. Cl.: H04W 28/02

(54) **METHOD AND SYSTEM FOR IMPLEMENTING NETWORK MANAGEMENT BASED ON THIN WIRELESS ACCESS POINT ARCHITECTURE**

(30) Priority: 25.11.2010 CN 201010560244
(71) Applicant: ZTE Corporation, Shenzhen, Guangdong 518057 (CN)
(72) Inventor: XIANG, Xingguo, Guangdong 518057 (CN)
(74) Representative: South, Nicholas Geoffrey
(86) International application number: PCT/CN2011/078542
(87) International publication number: WO 2012/068909

(57) **Abstract**

The present invention provides a method and a system for implementing network management based on thin Access Point (AP) architecture. The method includes: during predetermined processing, implementing communication between an Access Controller (AC) and an AP by use of a Control And Provisioning of Wireless Access Points (CAPWAP) protocol, wherein the predetermined processing includes at least one of the following: the AC delivering configuration information from a network management platform to the AP, the AC obtains collected information, which is used for responding to an information collection request of the network management platform, from the AP, and the AP reporting a TRAP event to the network management platform through the AC. The present invention optimizes the framework of a thin AP network management system, so that the efficiency of Simple Network Management Protocol (SNMP) network management can be improved, the load of the network management system can be reduced, and the network quality can be improved.

## Description

### Technical Field

The present invention relates to the field of communications, and in particular to a method and a system for implementing network management based on thin wireless Access Point (AP) architecture.

### Background

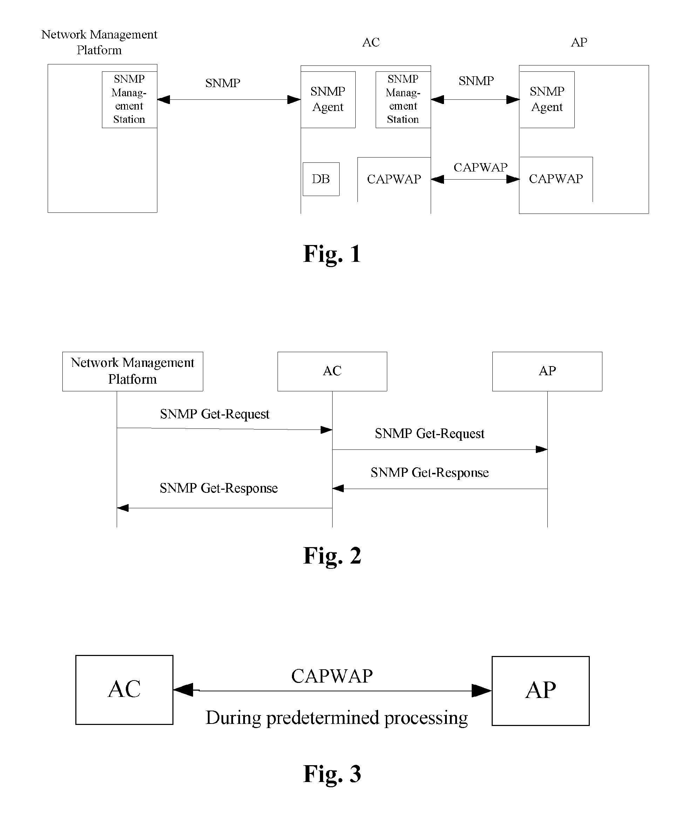

Since the thin AP architecture has become a new trend of the Wireless Local Area Network (WLAN) industry in 2002, the WLAN networking began to manage a plurality of APs via a wireless controller (also named as wireless Access Controller (AC)). The AC centrally implements mandatory strategies and authentication to the WLAN system, and implements unified configuration and management to the APs in the system. Fig. 1 shows a diagram of network management architecture of a thin AP system according to the related technologies. As shown in Fig. 1, the network management system under the thin AP system mainly consists of a network management platform, an AC and an AP. The network management platform mainly implements management to the entire system via a Simple Network Management Protocol (SNMP). The AC implements configuration and management to the AP mainly based on a Control And Provisioning of Wireless Access Points (CAPWAP) protocol and the SNMP protocol.

The CAPWAP is a framework protocol for defining the interaction of control and data messages between the AC and the AP, and implements the interaction between the AP and the AC by adopting a Client/Server (C/S) model of a User Datagram Protocol (UDP). A CAPWAP message is classified into a control message and a data message. The CAPWAP message mainly uses a Message Type to appoint functions of the control message, and uses message elements to deliver specific parameters.

The SNMP is a network management protocol which is applied most widely in the Transmission Control Protocol/Internet Protocol (TCP/IP) network at present. The SNMP is mainly used for implementing that the network management platform collects network management information from a device of the thin AP system, and the device (mainly referring to the AP) reports problems and mistakes to the network management system. The SNMP interaction between the network management and the AP needs to be forwarded via the AC. The SNMP protocol adopts a special form of the C/S model: Agent/management station model. The management and maintenance to the network can be completed via the interaction between a management workstation and an SNMP Agent. Each SNMP slave agent is responsible for answering various queries of the SNMP management workstation (master agent) about the information defined by a Management Information Base (MIB). The configuration and management to the AP implemented by the network management platform needs to be forwarded via the AC, thus the AC needs to implement periodic collection for the AP in the system via a polling mode. Fig. 2 shows a flowchart of collecting information of the AP by a network management platform of a thin AP system according to the related technologies. As shown in Fig. 2, the SNMP management station uses a Get-Request message to search for information from a network device which has an SNMP, and the SNMP Agent responds by use of a Get-Response message. The SNMP management station can implement remote configuration (including device names, device properties, canceling the devices, or make a certain device property valid/invalid, and the like) for a network devices by use of a Set-Request. The SNMP Agent uses a TRAP to send, to the SNMP management station, a non-request message which is generally used for describing occurrence of a certain event.

The inventor finds that the mode of implementing management interaction between the AC and the AP via the SNMP in the related technologies causes processing congestion, so as to reduce the system performance.

### Summary

The present invention provides a method and a system for implementing network management based on thin AP architecture, in order to solve the above problem.

One aspect of the present invention provides a method for implementing network management based on the thin AP architecture, including: during predetermined processing, implementing communication between an Access Controller (AC) and an AP by use of a Control And Provisioning of Wireless Access Points (CAPWAP) protocol, wherein the predetermined processing includes at least one of the following: the AC delivering configuration information from a network management platform to the AP, the AC obtaining collected information, which is used for responding to an information collection request of a network management platform, from the AP, and the AP reporting a TRAP event to the network management platform through the AC.

In a case that the predetermined processing includes the AC delivering the configuration information from the network management platform to the AP, implementing communication between the AC and the AP by use of the CAPWAP protocol includes: the AC analyzing and verifying configuration information of a Simple Network Management Protocol (SNMP) format delivered by the network management platform; the AC delivering the analyzed and verified configuration information to the AP via the CAPWAP protocol.

In a case that the predetermined processing includes the AC obtaining the collected information, which is used for responding to the information collection request of the network management platform, from the AP, implementing communication between the AC and the AP by use of the CAPWAP protocol includes: the AP reporting the collected information to the AC via the CAPWAP protocol; the AC stores the collected information.

After the AC stores the collected information, the method further includes: the AC receiving the information collection request of the network management platform; in response to the information collection request, the AC reporting the stored collected information to the network management platform.

In a case that the predetermined processing includes the AP reporting the TRAP event to the network management platform via the AC, implementing communication between the AC and the AP by use of the CAPWAP protocol includes: in a case that the TRAP event occurs, the AP reporting the TRAP event to the AC via the CAPWAP protocol.

After the AP reports the TRAP event to the AC via the CAPWAP protocol, the method further includes: the AC implementing processing according to the TRAP event, and determining whether to report the TRAP event to the network management platform.

The collected information includes at least one of the following: configuration information of the AP, and performance statistics information of the AP.

The architecture for implementing communication via an SNMP is cancelled between the AC and the AP.

Another aspect of the present invention provides a system for implementing network management based on thin wireless Access Point (AP) architecture, the system includes an Access Controller (AC) and an AP, wherein the AC includes: a Control And Provisioning of Wireless Access Points (CAPWAP) communication module, configured to, during predetermined processing, implement communication with the AP by use of a CAPWAP protocol; the AP includes: a CAPWAP communication module, configured to, during the predetermined processing, implement communication with the AC by use of the CAPWAP protocol; wherein the predetermined processing includes at least one of the following: the AC delivering configuration information from a network management platform to the AP, the AC obtaining collected information, which is used for responding to an information collection request of a network management platform, from the AP, and the AP reporting a TRAP event to the network management platform through the AC.

In a case that the predetermined processing includes the AC delivering the configuration information from the network management platform to the AP, the CAPWAP communication module of the AC is configured to, after analyzing and verifying configuration information of a Simple Network Management Protocol (SNMP) format delivered by the network management platform, deliver the analyzed and verified configuration information to the AP via the CAPWAP protocol; in a case that the predetermined processing includes the AC obtaining the collected information, which is used for responding to the information collection request of the network management platform, from the AP, the CAPWAP communication module of the AP is configured to report the collected information to the AC via the CAPWAP protocol; the AC further includes a storage module and an SNMP Agent module, wherein the storage module is configured to store the collected information, the SNMP Agent module is configured to report the collected information stored by the storage module to the network management platform after the information collection request is received from the network management platform; in a case that the predetermined processing includes the AP reporting the TRAP event to the network management platform via the AC, the CAPWAP communication module of the AP is configured to report the TRAP event to the AC via the CAPWAP protocol when the TRAP event occurs.

When one or more of the conditions, i.e. the AC delivering the configuration information from the network management platform to the AP, the AC obtaining, from the AP, the collected information used for responding to the information collection request of the network management platform, and the AP reporting the TRAP event to the network management platform via the AC, is happening, the communication between the AC and the AP is implemented by use of the CAPWAP protocol. The present invention solves the problem that the processing mode in the related technologies may cause processing congestion, thus reducing the system performance, and optimizes the framework of the thin AP network management system, so that the efficiency of the SNMP network management can be improved, the load of the network management system can be reduced, and the network quality can be improved.

### Brief Description of the Drawings

Drawings, provided for further understanding of the present invention and forming a part of the specification, are used to explain the present invention together with embodiments of the present invention rather than to limit the present invention, wherein:
Fig. 1 shows a diagram of network management architecture of a thin AP system according to the related technologies;
Fig. 2 shows a flowchart of collecting information of the AP by a network management platform of a thin AP system according to the related technologies;
Fig. 3 shows a diagram of a method for implementing network management based on thin wireless AP architecture according to an embodiment of the present invention;
Fig. 4 shows a structure diagram of a system for implementing network management based on thin AP architecture according to an embodiment of the present invention;
Fig. 5 shows a preferred structure diagram of a system for implementing network management based on thin AP architecture according to an embodiment of the present invention;
Fig. 6 shows a schematic diagram of the optimized network management system of the thin AP system according to the embodiment 1;
Fig. 7 shows a flowchart that the AC delivers, via the CAPWAP, the configuration information delivered by the network management platform based on the structure as shown in Fig. 6 according to the embodiment 2;
Fig. 8 shows a flowchart that the optimized network management platform of the thin AP system collects information of the AP according to the embodiment 3;
Fig. 9 shows a flowchart that the AC processes SNMP GET based on the structure as shown in Fig. 6 according to the embodiment 3.

### Detailed Description of the Embodiments

The present invention is described below in details with reference to the drawings and embodiments. It should be noted that, the embodiments in the application and the characteristics of the embodiments can be mutually combined if there is no conflict.

Fig. 3 shows a diagram of a method for implementing network management based on thin wireless AP architecture according to an embodiment of the present invention. As shown in Fig. 3, during predetermined processing, communication between an AC and an AP is implemented by use of a CAPWAP protocol, wherein the predetermined processing includes at least one of the following: the AC delivering configuration information from a network management platform to the AP, the AC obtaining collected information, which is used for responding to an information collection request of the network management platform, from the AP, and the AP reporting a TRAP event to the network management platform through the AC.

In the related technologies, the AC collects information of the AP by adopting a periodic polling mode (as shown in Fig. 2), in this case, the AC needs to collect all the information of all the APs which are managed by the AC at the same moment, thus causing high network load and high processing load of the AC and the AP, and easily causing network congestion when there are a plurality of APs in the system, but the data information of the user may not be effectively processed, thus affecting the network quality. In the method of the embodiment, when implementing the processing relative to the management interaction between the AC and the AP, the interaction of management information between the AC and the AP is implemented by adopting the CAPWAP protocol, thus reducing the efficiency of the SNMP network management, reducing the load of the network management system, and improving the network quality.

In order to avoid the configuration conflicts caused by delivering the configuration via various kinds of channels by the AC, during the predetermined processing, the communication between the AC and the AP can be implemented by adopting the CAPWAP protocol only.

In actual applications, with respect to the above predetermined processing, the procedure of implementing communication between the AC and the AP by use of the CAPWAP protocol can be implemented by referring to the processes described below.
(1) In the case that the predetermined processing includes that the AC delivers the configuration information from the network management platform to the AP:
   the AC may analyze and verify configuration information of an SNMP format delivered by the network management platform, and then deliver the analyzed and verified configuration information to the AP via the CAPWAP protocol.

By virtue of the above method, the communication between the AC and the AP via the CAPWAP protocol can be implemented in the case that the AC delivers the configuration information from the network management platform to the AP.
(2) In the case that the predetermined processing includes that the AC obtains the collected information, which is used for responding to the information collection request of the network management platform, from the AP:
   the AP reports collected information to the AC via the CAPWAP protocol, the AC stores the collected information after receiving the collected information; subsequently, when the AC receives the information collection request from the network management platform, in response to the information collection request, the AC can report the stored collected information to the network management platform.

By virtue of the above method, the AC conveniently implements the conversion between the SNMP processing mode and the CAPWAP processing mode. In the case that the network management platform implements processing via the SNMP mode, the interaction between the AC and the AP is implemented by use of the CAPWAP mode, which not only prevents high network load caused by the condition that the AC needs to collect all the information of all the APs which are managed by the AC at the same moment, but also implements the SNMP interaction between the AC and the AP.

Preferably, the above collected information may include at least one of the following: configuration information of the AP, and performance statistics information of the AP.
(3) In the case that the predetermined processing includes that the AP reports the TRAP event to the network management platform via the AC:
   the AP reports the TRAP event to the AC via the CAPWAP protocol in the case that the TRAP event occurs; the AC implements processing according to the TRAP event, and determines whether to report the TRAP event to the network management platform.

By virtue of the above method, the communication between the AC and the AP via the CAPWAP protocol is implemented in the case that the AP reports the TRAP event to the network management platform via the AC.

Considering that the conflict of two kinds of configuration easily occurs when the AC delivers configuration via two kinds of channels, i.e. the SNMP channel and the CAPWAP channel, as a preferred solution, the architecture of implementing communication via the SNMP can be canceled between the AC and the AP, so as to reduce the complexity of the AC and the AP and improve the processing capacity of the AC and the AP. In addition, if other network management modes (such as TR069) need to be added subsequently, it is only required to perform relative adaptive processing on the AC for configuration query of newly-added network management modes, and the AP needs not to be changed, thus greatly increasing the expansibility of the network management system.

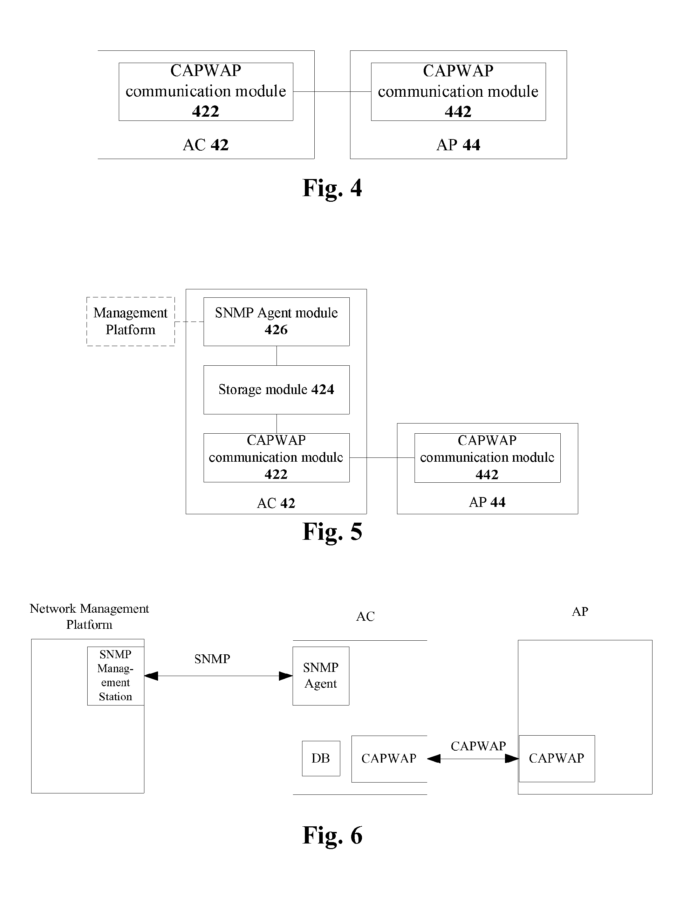

Fig. 4 shows a structure diagram of a system for implementing network management based on thin AP architecture according to an embodiment of the present invention. The system includes an AC 42 and an AP 44, wherein the AC 42 includes: a CAPWAP communication module 422, configured to, during the predetermined processing, implement communication with the AP 44 by use of a CAPWAP protocol; the AP 44 includes: a CAPWAP communication module 442, configured to, during the predetermined processing, implement communication with the AC 42 by use of the CAPWAP protocol. The predetermined processing includes at least one of the following: the AC 42 delivering configuration information from the network management platform to the AP 44, the AC 42 obtaining collected information, which is used for responding to an information collection request of the network management platform, from the AP 44, and the AP 44 reporting a TRAP event to the network management platform through the AC 42.

Preferably, in the case that the predetermined processing includes that the AC 42 delivers the configuration information from the network management platform to the AP 44, the CAPWAP communication module 422 of the AC 42 is configured to, after analyzing and verifying the configuration information of an SNMP format delivered by the network management platform, deliver the analyzed and verified configuration information to the AP 44 via the CAPWAP protocol.

Fig. 5 shows a preferred structure diagram of a system for implementing network management based on thin AP architecture according to an embodiment of the present invention. As shown in Fig. 5, in the case that the predetermined processing includes that the AC 42 obtains the collected information, which is used for responding to the information collection request of the network management platform, from the AP 44, the CAPWAP communication module 442 of the AP 44 is configured to report collected information to the AC 42 via the CAPWAP protocol; the AC 42 further includes a storage module 424 and an SNMP Agent module 426, wherein the storage module 424 is configured to store the collected information, the SNMP Agent module 426 is configured to report the collected information stored by the storage module to the network management platform after receiving the information collection request of the network management platform.

Preferably, in the case that the predetermined processing includes that the AP 44 reports the TRAP event to the network management platform via the AC 42, the CAPWAP communication module 442 of the AP 44 is configured to report the TRAP event to the AC 42 via the CAPWAP protocol when the TRAP event occurs.

The technical solutions of the plurality of preferred embodiments are integrated by the embodiments 1-3 described below.

### Embodiment 1

This embodiment mainly modifies all current SNMP interaction flows between the AC and AP to be CAPWAP interaction flows, mainly including the following technical points.
(1) The configuration information delivered by the network management platform is delivered by the AC via the CAPWAP instead of the SNMP.

After analyzing and verifying the SNMP configuration information delivered by the SNMP network management platform, the AC delivers the analyzed and verified information to the AP via the CAPWAP, and stores the analyzed and verified information in a Data Base (DB). In this way, the AC delivers the configuration information to the AP via the CAPWAP channel only.
(2) The information collection is changed to the mode that the AP actively reports the information via the CAPWAP from the mode that the AC implements collection via the SNMP polling. The AP actively reports the collected information about the performance via the CAPWAP. When the network management platform collects the information, the AC directly reads the related configuration information or the performance statistics information from the DB.

As the AP is zero-configuration under the thin AP architecture, the AC does not need to collect the configuration information of the AP from the AP, but needs to collect the performance statistics information of the AP from the AP. According to the actual conditions, the AP can report the performance statistics information to the AC via the CAPWAP, and the AC stores the performance statistics information to the DB; the AC directly reads the relative configuration information or the performance statistics information from the DB when the SNMP network management platform collects the information.
(3) The TRAP event is reported by the AP via the CAPWAP instead of the SNMP.

After a specific event (TRAP event) occurs, the AP reports the specific event to the AC via the CAPWAP. The AC implements relative processing according to the specific information of the event, and determines whether to report to the SNMP network management platform. Thus, the AP reports the specific event to the AC via the CAPWAP channel only.

Fig. 6 shows a schematic diagram of the optimized network management system of the thin AP system according to the embodiment 1. As shown in Fig. 6, after the interaction between the AC and the AP is unified as the CAPWAP mode, the relative implementation of the SNMP interaction between the AC and the AP can be canceled, thus reducing the complexity of the AC and the AP and improving the processing capacity of the AC and the AP. In addition, if other network management modes (such as TR069) need to be added subsequently, it is only required to perform relative adaptive processing on the AC for configuration query of newly-added network management modes, and the AP needs not to be changed, thus greatly increasing the expansibility of the network management system.

It should be noted that, the following embodiments describe the conditions that the above predetermined processing includes that the AC delivers configuration information from a network management platform to the AP, the AC obtains collected information, which is used for responding to an information collection request of the network management platform, from the AP, and the AP reports a TRAP event to the network management platform through the AC. Those skilled in the art should understand that when the predetermined processing includes any one or the combination of the above processing, the effects of improving the efficiency of the SNMP network management, reducing the load of the network management system and improving the network quality can also be achieved.

### Embodiment 2

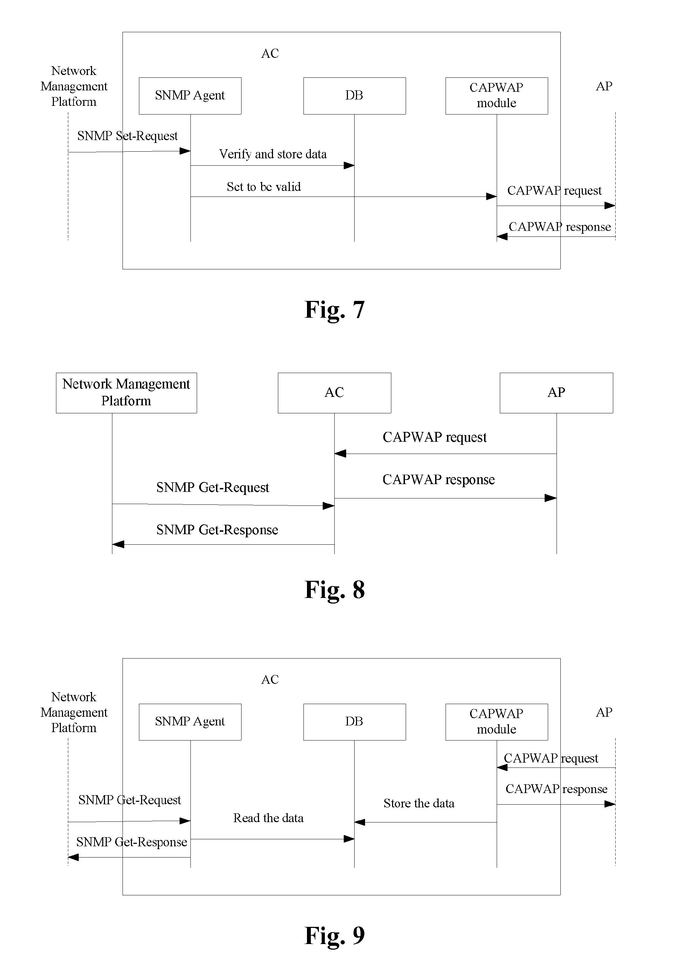

Fig. 7 shows a flowchart that the AC delivers, via the CAPWAP, the configuration information delivered by the network management platform based on the structure as shown in Fig. 6 according to the embodiment 2. As shown in Fig. 7, the flow includes the following steps:
Step 1, the network management platform delivers an SNMP Set-Request to the SNMP Agent of the AC, wherein the SNMP Set-Request includes the configuration information to the AP provided by the network management platform;
Step 2, the SNMP Agent verifies the configuration information, and then stores the configuration information to the DB, sets the analyzed and verified configuration information to be valid, and configures the information into the CAPWAP module;
Step 3, the CAPWAP module delivers the configuration information to the AP in a CAPWAP Request via the CAPWAP protocol;
Step 4, the AP returns a CAPWAP Response to the CAPWAP module, and the configuration is implemented successfully.

### Embodiment 3

Fig. 8 shows a flowchart that the optimized network management platform of the thin AP system collects information of the AP according to the embodiment 3. The flow includes the following steps:
Step 1, the AP reports the configuration information or the performance statistics information of the AP to the AC via a CAPWAP request;
Step 2, the AC returns a CAPWAP response;
Step 3, the network management platform sends SNMP Get-Request information to the AC to request to collect the information of the AP;
Step 4, the AC returns SNMP Get-Response information to the network management platform, wherein the SNMP Get-Response information carries the configuration information or the performance statistics information of the AP.

Fig. 9 shows a flowchart that the AC processes SNMP GET based on the structure as shown in Fig. 6 according to the embodiment 3. The flow includes the following steps:
Step 1, the AP reports the configuration information or the performance statistics information of the AP to the CAPWAP module of the AC via a CAPWAP request;
Step 2, the CAPWAP module of the AC returns a CAPWAP response, and stores the received configuration information or performance statistics information to the DB of the AC;
Step 3, the SNMP Agent of the AC receives SNMP Get-Request information from the network management platform, wherein the SNMP Get-Request information requests to collect the information of the AP;
Step 4, the SNMP Agent of the AC returns SNMP Get-Response information to the network management platform after reading the data from the DB, wherein the SNMP Get-Response information carries the configuration information or the performance statistics information of the AP.

From the above description, it can be concluded that the solutions of the above embodiments greatly reduce the number of the network management messages between the AC and the AP, reduce the probability of network congestions, and improve the network quality. At the same time, the solutions of the above embodiments reduce the complexity of the AC and AP systems, improve the processing capacity of the AC and the AP, and unify the management mode to the AP implemented by the AC, thereby improving the stability, compatibility and expansibility of the system.

Obviously, those skilled in the art shall understand that the above-mentioned modules and steps of the present invention can be realized by using general purpose calculating device, can be integrated in one calculating device or distributed on a network which consists of a plurality of calculating devices. Alternatively, the modules and the steps of the present invention can be realized by using the executable program code of the calculating device. Consequently, they can be stored in the storing device and executed by the calculating device, or they are made into integrated circuit module respectively, or a plurality of modules or steps thereof are made into one integrated circuit module. In this way, the present invention is not restricted to any particular hardware and software combination.

The descriptions above are only the preferable embodiment of the present invention, which are not used to restrict the present invention. For those skilled in the art, the present invention may have various changes and variations. Any amendments, equivalent substitutions, improvements, etc. within the principle of the present invention are all included in the scope of the protection of the present invention.

## Claims

1. A method for implementing network management based on thin wireless Access Point (AP) architecture, **characterized in that** the method comprises:
during predetermined processing, implementing communication between an Access Controller (AC) and an AP by use of a Control And Provisioning of Wireless Access Points (CAPWAP) protocol, wherein the predetermined processing comprises at least one of the following: the AC delivering configuration information from a network management platform to the AP, the AC obtaining collected information, which is used for responding to an information collection request of a network management platform, from the AP, and the AP reporting a TRAP event to the network management platform through the AC.

2. The method according to claim 1, **characterized in that** in a case that the predetermined processing comprises the AC delivering the configuration information from the network management platform to the AP, implementing communication between the AC and the AP by use of the CAPWAP protocol comprises:
the AC analyzing and verifying configuration information of a Simple Network Management Protocol (SNMP) format delivered by the network management platform;
the AC delivering the analyzed and verified configuration information to the AP via the CAPWAP protocol.

3. The method according to claim 1, **characterized in that** in a case that the predetermined processing comprises the AC obtaining the collected information, which is used for responding to the information collection request of the network management platform, from the AP, implementing communication between the AC and the AP by use of the CAPWAP protocol comprises:
the AP reporting the collected information to the AC via the CAPWAP protocol;
the AC stores the collected information.

4. The method according to claim 3, **characterized in that** after the AC stores the collected information, the method further comprises:
the AC receiving the information collection request of the network management platform;
in response to the information collection request, the AC reporting the stored collected information to the network management platform.

5. The method according to claim 1, **characterized in that** in a case that the predetermined processing comprises the AP reporting the TRAP event to the network management platform via the AC, implementing communication between the AC and the AP by use of the CAPWAP protocol comprises:
in a case that the TRAP event occurs, the AP reporting the TRAP event to the AC via the CAPWAP protocol.

6. The method according to claim 5, **characterized in that** after the AP reports the TRAP event to the AC via the CAPWAP protocol, the method further comprises:
the AC implementing processing according to the TRAP event, and determining whether to report the TRAP event to the network management platform.

7. The method according to claim 1, 3 or 4, **characterized in that** the collected information comprises at least one of the following: configuration information of the AP, and performance statistics information of the AP.

8. The method according to any one of claims 1 to 6, **characterized in that** architecture for implementing communication via an SNMP is cancelled between the AC and the AP.

9. A system for implementing network management based on thin wireless Access Point (AP) architecture, **characterized in that** the system comprises an Access Controller (AC) and an AP, wherein
the AC comprises:
a Control And Provisioning of Wireless Access Points (CAPWAP) communication module, configured to, during predetermined processing, implement communication with the AP by use of a CAPWAP protocol;
the AP comprises:
a CAPWAP communication module, configured to, during the predetermined processing, implement communication with the AC by use of the CAPWAP protocol;
wherein the predetermined processing comprises at least one of the following: the AC delivering configuration information from a network management platform to the AP, the AC obtaining collected information, which is used for responding to an information collection request of a network management platform, from the AP, and the AP reporting a TRAP event to the network management platform through the AC.

10. The system according to claim 9, **characterized in that**
in a case that the predetermined processing comprises the AC delivering the configuration information from the network management platform to the AP, the CAPWAP communication module of the AC is configured to, after analyzing and verifying configuration information of a Simple Network Management Protocol (SNMP) format delivered by the network management platform, deliver the analyzed and verified configuration information to the AP via the CAPWAP protocol;
in a case that the predetermined processing comprises the AC obtaining the collected information, which is used for responding to the information collection request of the network management platform, from the AP, the CAPWAP communication module of the AP is configured to report the collected information to the AC via the CAPWAP protocol; the AC further comprises a storage module and an SNMP Agent module, wherein the storage module is configured to store the collected information, the SNMP Agent module is configured to report the collected information stored by the storage module to the network management platform after the information collection request is received from the network management platform;
in a case that the predetermined processing comprises the AP reporting the TRAP event to the network management platform via the AC, the CAPWAP communication module of the AP is configured to report the TRAP event to the AC via the CAPWAP protocol when the TRAP event occurs.
